# EUROPÄISCHE PATENTANMELDUNG

(11) **EP 0 952 386 A2**
(43) Veröffentlichungstag der Anmeldung: **27.10.1999**
(21) Anmeldenummer: 99810335.2
(22) Anmeldetag: 22.04.1999
(51) Int. Cl.: F17D 5/02, G01M 3/28

(54) **Leckagemessgerät**

(30) Priorität: 24.04.1998 DE 19818712
(71) Anmelder: Zimmerli Messtechnik AG, 4125 Riehen 1 (CH)
(72) Erfinder: Knecht, Karl, 79736 Rickenbach-Egg (DE)
(74) Vertreter: Bollhalder, Renato

(57) **Zusammenfassung**

Ein Leckagemessgerät (6) zur Messung der Leckage einer dichtschliessenden Armatur, insbesondere eines Ventils (1), umfasst ein Messrohr (11), einen Temperaturfühler (7) zur Messung der Temperatur des Messrohrs (11) und eine Auswerteeinrichtung zur Auswertung der Messwerte des Temperaturfühlers (7). Das Messrohr (11) weist einen Luftausgang (12) auf. In ihm ist ein Innenrohr (9) mit einem Lufteinlass (8) so angeordnet, dass über den Lufteinlass (8) in das Innenrohr (9) eingeführte Luft in der Nähe des Temperaturfühlers (7) in den Raum zwischen Innenrohr (9) und Messrohr (11) strömt, sich beim Überströmen ausdehnt und das Messrohr (11) in der Umgebung des Temperaturfühlers (7) abkühlt, und dann über den Luftausgang (12) aus dem Messrohr (11) ausströmt. Mit dem erfindungsgemässen Leckagemessgerät (6) kann die Grösse der Leckage auch von einem Nicht-Fachmann in Volumen/Zeiteinheit bestimmt und die Zunahme der Undichtigkeit verfolgt werden.

## Beschreibung

### Anwendungsgebiet der Erfindung

Die Erfindung betrifft ein Leckagemessgerät zur Messung der Leckage einer dichtschliessenden Armatur, insbesondere eines Ventils, wie es im Oberbegriff des unabhängigen Patentanspruchs 1 definiert ist.

### Stand der Technik

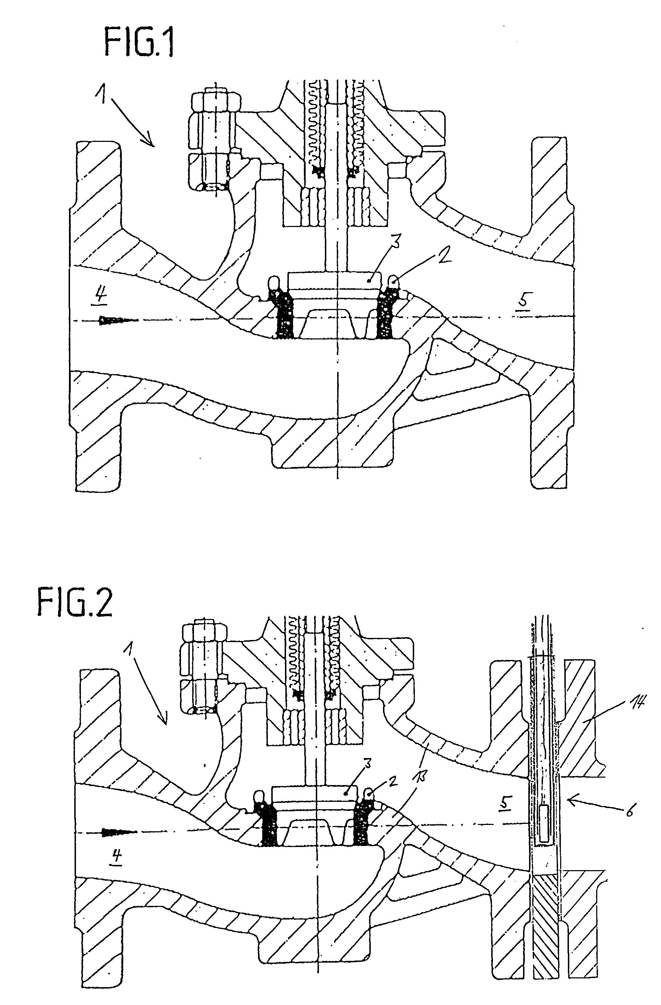

Zur Erläuterung des Standes der Technik wird auf Fig. 1 Bezug genommen. Grundsätzlich hat jedes Regelventil 1 mit Ventileingang 4 und Ventilausgang 5, das in eine Dampfleitung eingesetzt ist, eine Leckage. Das heisst, durch die Abdichtung zwischen Ventilsitz 2 und Ventilkegel 3 in vollständig geschlossenem Zustand strömt unerwünscht Dampf hindurch, was zu Energieverlusten führt. Um übermässig grosse Leckagen ausfindig zu machen, wurden daher Leckagemessgeräte entwickelt.

Aus der WO 90/12301 ist ein Leckagemessgerät bekannt, das ein um eine Rohrleitung herum montierbares Messrohr aufweist, das von Luft durchströmt wird, deren Temperatur ausserhalb des Messrohrs von einem Temperaturfühler gemessen und von einer Auswerteeinrichtung ausgewertet wird. Auf diese Weise kann die Leckage über die Erhöhung der Temperatur der das Messrohr durchströmenden Luft ermittelt werden. Nachteilhaft bei diesem Leckagemessgerät ist, dass die Temperaturmessung ausserhalb des Messrohrs Leitungen zum Transport der Messluft nötig macht, die keinen wechselnden äusseren Temperatureinflüssen ausgesetzt sein sollten.

In der DE-A-42 32 801 ist ein Ventil für Heizungs- oder Klimaanlagen mit einem Temperaturfühler zur Bestimmung der Menge des durchfliessenden Wärmeträgermediums mittels Temperaturmessung beschrieben. Eine schnelle und präzise Leckagemessung ist aber nicht möglich.

### Aufgabe der Erfindung

Der Erfindung liegt die Aufgabe zugrunde, eine Vorrichtung zur Messung der Leckage eines Ventils oder einer anderen dichtschliessenden Armatur der eingangs erwähnten Art zu schaffen, das ohne Lufttemperaturmessung ausserhalb des Messrohrs auskommt.

### Wesen der Erfindung

Diese Aufgabe wird durch das erfindungsgemässe Leckagemessgerät gelöst, wie es im unabhängigen Patentanspruch 1 definiert ist. In den Patentansprüchen 7 und 9 sind zwei erfindungsgemässe Verfahren zur Messung der Leckage einer dichtschliessenden Armatur definiert. Bevorzugte Ausführungsvarianten ergeben sich aus den abhängigen Patentansprüchen.

Mit dem erfindungsgemässen Leckagemessgerät kann die Grösse der Leckage auch von einem Nicht-Fachmann in Volumen/Zeiteinheit bestimmt und die Zunahme der Undichtigkeit verfolgt werden. Die Messung kann mittels eines Analog-Temperaturfühlers oder auch mittels eines elektrischen Temperaturfühlers mit daran angeschlossener SPS-Steuerung erfolgen, mit allen Vorteilen einer Ventilleckageüberwachung.

### Kurzbeschreibung der beigefügten Zeichnungen

Es zeigen:
Fig. 1 - ein in eine Dampfleitung einbaubares Regelventil;
Fig. 2 - ein Regelventil mit einem ausgangsseitig angeordneten Leckagemessgerät;
Fig. 3 - das Leckagemessgerät von Fig. 2 in einer vergrösserten Darstellung;
Fig. 4 - ein Leckagediagramm in Abhängikeit von der Zeit und der Temperatur bei normaler Betriebsweise des Leckagemessgeräts und
Fig. 5 - ein Leckagediagramm in Abhängikeit von der Zeit und der Temperatur bei umgekehrter Betriebsweise des Leckagemessgeräts.

### Ausführungsbeispiel

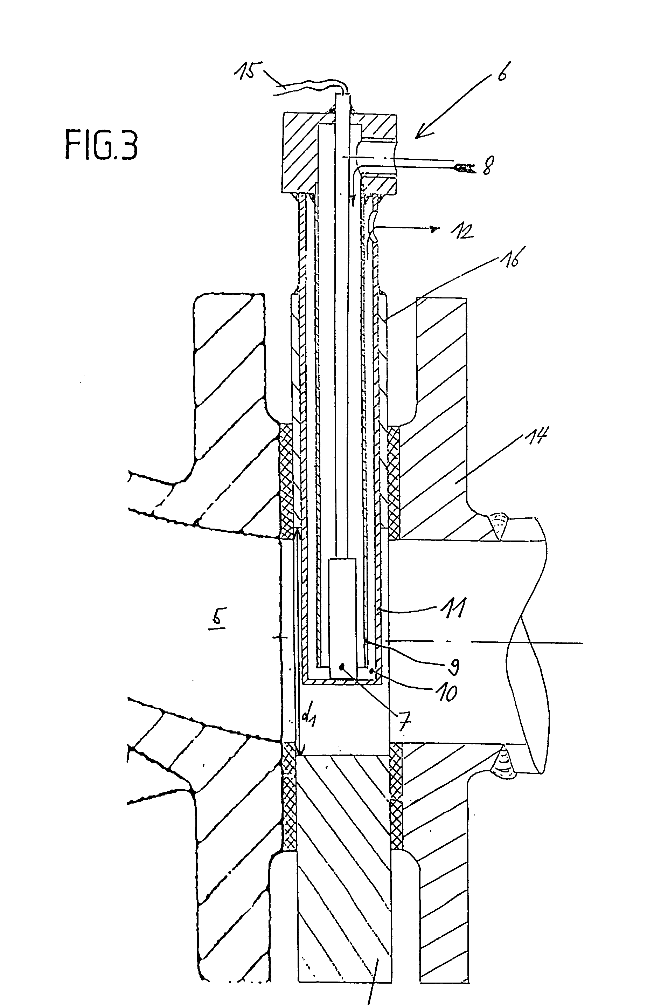

Mit Bezug auf die Figuren 2 und 3 wird nachstehend ein Ausführungsbeispiel eines erfindungsgemässen Leckagemessgeräts detaillierter erläutert.

Ein Regelventil 1 mit einem Ventileingang 4 und einem Ventilausgang 5 ist z.B. in einer 5 bar-Dampfleitung 14 eingebaut, um einen Behälter auf einer bestimmten Temperatur zu halten. Am Ventilausgang 5 ist ein Leckagemessgerät 6 angeordnet. Durch das Regelventil 1 und das Leckagemessgerät 6 strömt z.B. 150°C heisser Dampf und heizt das Ventil 1 mit Ventilsitz 2, Ventilkegel 3 und Ventilgehäuse 13 sowie einen im nachfolgenden Leckagemessgerät 6 eingebauten Temperaturfühler 7 und ein Messrohr 11 auf 150°C auf. Dies wird ersichtlich an einer externen Temperatur-Messanzeige, die über ein Kabel 15 mit dem Temperaturfühler 7 verbunden ist.

Zur Leckagemessung bei normaler Betriebsweise des Leckagemessgeräts wird das Regelventil 1 geschlossen und gleichzeitig ein Lufteinlass 8 am Leckagemessgerät 6 geöffnet. Durch den Lufteinlass 8 strömt ca. 20°C warme Luft ein, die unter einem solchen Druck steht, dass sie ein im Innern des Messrohrs 11 angeordnetes Innenrohr 9 des Leckagemessgeräts 6 durchströmt und am Rohrende 10 beim Temperaturfühler 7 einen Luftdruck von beispielsweise 6 bar aufweist. Am Rohrende 10 erweitert sich die Raumquerschnittsfläche ungefähr auf das Dreifache und die Luft strömt zwischen dem Innenrohr 9 und dem äusseren Messrohr 11 zurück zu einem Ausgang 12 und wieder aus dem Leckagemessgerät 6 hinaus. Aufgrund der starken Erweiterung der Raumquerschnittsfläche entsteht am Rohrende 10 Expansionskälte, während der Druck der Luft gegen den Ausgang 12 hin auf Normaldruck abnimmt. Gleichzeitig wird die zurückströmende Luft durch die Wärmeenergie des äusseren Messrohrs 11 erwärmt. Das Ziel dieses Luftdurchströmens ist es, das äussere Messrohr 11 beim Temperaturfühler 7 möglichst schnell auf ca. 10°C abzukühlen. Wenn dies gemäss Temperatur-Messanzeige erreicht ist, wird der Lufteinlass 8 geschlossen.

Nun wird der Temperaturanstieg am äusseren Messrohr 11 beobachtet und die Zeit gemessen, die vom Abstellen der Kühlluft durch Schliessen des Lufteinlasses 8 bis zum Erreichen einer Temperatur von 150°C am äusseren Messrohr 11 verstreicht. Der Temperaturanstieg wird durch zwei Faktoren beeinflusst:
- einer sogenannten Konstanten, mit der die Umgebungstemperatur (Strahlungswärme) rund um das äussere Messrohr 11 gemeint ist (der Ventilausgang 5 und die Innenfläche der an das Leckagemessgerät 6 anschliessenden Rohrleitung 14 haben immer noch eine Temperatur von ca. 150°C);
- einer sogenannten Variablen, mit der die Wärmeenergie des Dampfes, der durch die Leckage am Ventilsitz 2 und Ventilkegel 3 strömt, gemeint ist. Der Dampf des Lecks kann seine Energie nicht an das Ventilgehäuse 13 abgegeben, weil dieses immer noch eine Temperatur von ca. 150°C hat. Daher strömt der heisse Dampf durch den Ventilausgang 5 und trifft auf das durch die Expansionskälte auf ca. 10°C abgekühlte äussere Messrohr 11, wo der Dampf sofort einen Grossteil seiner Energie abgibt. Dadurch ergibt sich am äusseren Messrohr 11 und in der Folge am Temperaturfühler 7 ein schnellerer Temperaturanstieg, als er sich durch die Konstante ergeben würde.

Es wurde erkannt, dass die Zeitspanne des Temperaturanstiegs von 10°C bis 150°C am Temperaturfühler 7 immer gleich lang ist, wenn Ventilsitz 2 und Ventilkegel 3 dicht sind und bleiben. Bei zunehmender Leckage an Ventilsitz 2 und Ventilkegel 3 wird diese Zeitspanne immer kürzer.

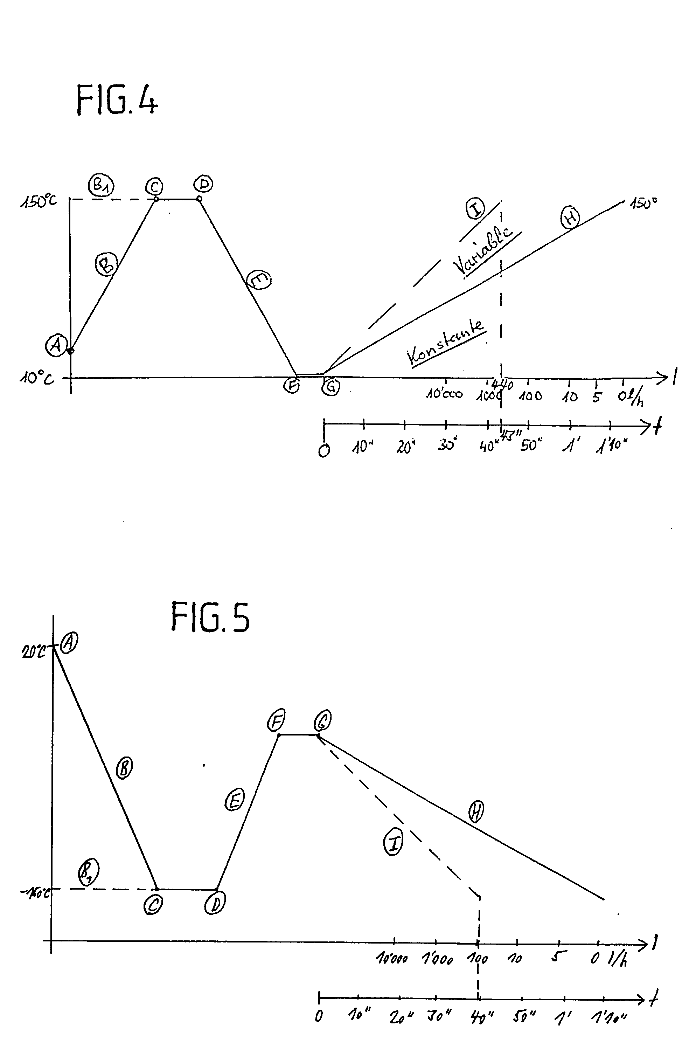

Über ein Leckagediagramm, wie in Fig. 4 dargestellt, kann die Grösse der Leckage abgelesen werden und der Zeitpunkt bestimmt werden, wann das Regelventil 1 repariert oder ersetzt werden sollte. Die in Fig. 4 bezeichneten Messpunkte, -kurven bzw. Zeitabschnitte haben folgende Bedeutung:
A - Start der Messung, Temperatur ca. 20° (Raumtemperatur);
B - Aufheizen des Regelventils 1, des Leckagemessgeräts 6 und der weiterführenden Rohrleitung 14 auf 150°C durch Öffnen des Regelventils 1;
B₁- Temperatur während der Produktion im Betriebszustand;
C - Erreichen der Betriebstemperatur im Regelventil 1, dem Leckagemessgerät 6 und der Rohrleitung 14;
D - Schliessen des Regelventils 1;
E - Öffnen und Beaufschlagen des Lufteinlasses 8 mit Luft mit einem Druck von 6 bar, Abkühlen des äusseren Messrohrs 11 auf ca. 10°C;
F - Erreichen der Eichtemperatur am Temperaturfühler 7;
G - Schliessen des Lufteinlasses 8;
H - Messkurve, wenn das Regelventil 1 keine Leckage hat (Konstante);
I - Messkurve, wenn beim Leckagemessgerät 6 zu der Konstanten noch die Leckageenergie des Dampfes dazukommt (Variable), d.h. der Temperaturfühler 7 ist schneller auf 150°C als bei Messkurve H.

Die Grösse der Leckage kann direkt durch Übertragen der Messzeit bis zum Erreichen der Betriebstemperatur 150°C von der Zeitachse t auf die Leckageachse 1 ermittelt werden. Für jedes Leckagemessgerät 6 stehen Leckage und Messzeit in einer festen Beziehung zueinander, die durch Kalibriermessungen vor Einsatz des Leckagemessgeräts 6 ermittelt wird. Im dargestellten Ausführungsbeispiel entspricht einer Messzeit von 43 Sekunden eine Leckage von 440 l/h.

Zur Berechnung der Leckageverluste eines Regelventils 1 wird zunächst von einer Druckluft-Leckage von 1 l/h bei einem Umgebungsvordruck von 5,5 bar ausgegangen. Eine derartige Leckage wird verursacht durch ein rundes Leck von 5 µm Durchmesser. Durch dieses Leck strömen je 1000 Betriebsstunden 0,807 kg Dampf mit einem Druck von 5 bar. Ein Leckageverlust ergibt sich bei geschlossenem Ventil, z.B. während Standzeiten an Wochenenden (52 Wochen à 48 h ergeben ca. 2500 h/Jahr) und bei nichtbeheizter Betriebsanlage.

Bei einem kleinen Regelventil 1, bei dem man äusserlich keine Erwärmung feststellen kann, berechnet sich bei einer gemessenen Leckage von 180 l/h Luft auf dem Prüfstand ein Dampfverlust von ca. 180 ∗ 0,807∗10⁻³ kg/h ∗ 2500 h/Jahr ≈ 363 kg/Jahr.

Neue Armaturen dürfen eine gewisse Leckage aufweisen. Beispielsweise ist für ein Gleitschieberventil DN 150 kVs 338 mit einer Stahlscheibenpaarung eine Leckage von 440 l/h zulässig. Daraus ergibt sich ein Verlust von ca. 888 kg Dampf/Jahr bereits für das Neuteil nur schon an den Wochenenden gerechnet.

Diese Zahlenbeispiele verdeutlichen, dass mit Hilfe eines erfindungsgemässen Leckagemessgeräts 6 durch rechtzeitiges Ersetzen oder Reparieren eines zu stark leckenden Ventils bedeutende Einsparungen gemacht werden können.

Das erfindungsgemässe Leckagemessgerät 6 kann überall eingesetzt werden, wo eine dichtschliessende Armatur, z.B. Regelventil 1, Gleitschieberventil, Kugelhahn, Klappen, Drehsegmentventil, Handabsperrhahn usw., einer Temperatur ausgesetzt ist, die höher ist als die Temperatur der durch die Expansion gekühlten Luft im äusseren Messrohr 11. Es ist von Vorteil, wenn das Medium gasförmig ist, aber nicht unbedingt notwendig. Das ideale Medium ist Dampf mit beliebiger Temperatur.

Die durch das äussere Messrohr 11 bewirkte Verkleinerung des Strömungsquerschnitts im Leckagemessgerät 6 wird vorzugsweise durch eine Vergrösserung des Innendurchmessers d₁ des Rohrteils 16 des Leckagemessgeräts 6 kompensiert, an dem das äussere Messrohr 11 befestigt ist, so dass keine Nachteile bezüglich einer Leitungsverengung auftreten.

Das erfindungsgemässe Leckagemessgerät 6 kann durch seine schmale und kompakte Bauweise nachträglich überall zwischen Ventilausgang 5 und der nachfolgenden Rohrleitung 14 eingesetzt werden. Gegebenenfalls kann die Anwesenheit eines pneumatischen Ventilantriebs zur Kühluftzufuhr benutzt werden. Das erfindungsgemässe Leckagemessgerät 6 kann von jedermann eingebaut und die Leckagemessung in einfachster Handhabung durchgeführt werden. Das Leckagemessgerät 6 könnte auch direkt in ein Ventilgehäuse hinter dem Ventilsitz 2 und Ventilkegel 3 im Bereich des Ventilausgangs 5 integriert werden. So wäre es vorteilhaft, bei einer Neukonstruktion des Ventils 1 diese Hochrüstung sogleich vorzusehen.

Das erfindungsgemässe Leckagemessgerät 6 kann auch in einer umgekehrten Weise betrieben werden, insbesondere wenn die dichtschliessende Armatur von einem Medium mit einer Temperatur unter 0°C, z.B. -150°C, durchströmt wird. Dabei wird der Ausgang 12 als Gaseinlass und der Einlass 8 als Gasauslass verwendet. Zur Leckagemessung wird das Regelventil 1 geschlossen und gleichzeitig der Ausgang 12 am Leckagemessgerät 6 geöffnet. Durch den Ausgang 12 wird beispielsweise ca. 20°C warmes Gas, z.B Luft, eingeströmt, das unter einem solchen Druck steht, dass es zwischen dem Innenrohr 9 und dem äusseren Messrohr 11 nach unten strömt und am Rohrende 10 beim Temperaturfühler 7 einen Druck von beispielsweise 6 bar aufweist. Am Rohrende 10 strömt das Gas in das Innenrohr 9 und in diesem zum Einlass 8 und wieder aus dem Leckagemessgerät 6 hinaus. Durch das durchströmende Gas wird das äussere Messrohr 11 beim Temperaturfühler 7 von ca. -150°C auf ca. -30°C erwärmt. Wenn dies gemäss Temperatur-Messanzeige erreicht ist, wird der Ausgang 12 geschlossen.

Nun wird die Temperaturabnahme am äusseren Messrohr 11 beobachtet und die Zeit gemessen, die vom Abstellen des wärmenden Gases durch Schliessen des Ausgangs 12 bis zum Erreichen einer Temperatur von ca. -150°C am äusseren Messrohr 11 verstreicht.

Über ein Leckagediagramm, wie in Fig. 5 dargestellt, kann die Grösse der Leckage abgelesen werden und der Zeitpunkt bestimmt werden, wann das Regelventil 1 repariert oder ersetzt werden sollte. Die in Fig. 5 bezeichneten Messpunkte, -kurven bzw. Zeitabschnitte haben folgende Bedeutung:
A- Start der Messung, Temperatur ca. 20° (Raumtemperatur);
B - Abkühlen des Regelventils 1, des Leckagemessgeräts 6 und der weiterführenden Rohrleitung 14 auf ca. -150°C durch Öffnen des Regelventils 1;
B₁- Temperatur während der Produktion im Betriebszustand;
C - Erreichen der Betriebstemperatur im Regelventil 1, dem Leckagemessgerät 6 und der Rohrleitung 14;
D - Schliessen des Regelventils 1;
E - Öffnen und Beaufschlagen des Ausgangs 12 mit Gas mit einem Druck von 6 bar, Erwärmen des äusseren Messrohrs 11 auf ca. -30°C;
F - Erreichen der Eichtemperatur am Temperaturfühler 7;
G - Schliessen des Ausgangs 12;
H - Messkurve, wenn das Regelventil 1 keine Leckage hat (Konstante);
I - Messkurve, wenn beim Leckagemessgerät 6 zu der Konstanten noch die Leckageabkühlung dazukommt (Variable), d.h. der Temperaturfühler 7 ist schneller auf -150°C als bei Messkurve H.

Die Grösse der Leckage kann wiederum direkt durch Übertragen der Messzeit bis zum Erreichen der Betriebstemperatur -150°C von der Zeitachse t auf die Leckageachse 1 ermittelt werden. Für jedes Leckagemessgerät 6 stehen Leckage und Messzeit in einer festen Beziehung zueinander, die durch Kalibriermessungen vor Einsatz des Leckagemessgeräts 6 ermittelt wird. Im dargestellten Ausführungsbeispiel entspricht einer Messzeit von 39 Sekunden eine Leckage von 100 l/h.

Im übrigen gilt das im Zusammenhang mit der normalen Betriebsweise des Leckagemessgeräts 6 Gesagte mutatis mutandis.

## Patentansprüche

1. Leckagemessgerät zur Messung der Leckage einer dichtschliessenden Armatur, insbesondere eines Ventils (1), mit einem Messrohr (11), einem Temperaturfühler (7) zur Messung der Temperatur des Messrohrs (11) und einer Auswerteeinrichtung zur Auswertung der Messwerte des Temperaturfühlers (7), wobei dem Leckagemessgerät (6) Luft zuführbar ist, dadurch gekennzeichnet, dass die Luft dem Leckagemessgerät (6) so zuführbar ist, dass sie sich in der Nähe des Temperaturfühlers (7) ausdehnt und durch die Expansionskälte das Messrohr (11) dort abkühlt.

2. Leckagemessgerät nach Anspruch 1, dadurch gekennzeichnet, dass das Messrohr (11) einen Luftausgang (12) und ein Innenrohr (9) einen Lufteinlass (8) aufweist und so im Messrohr (11) angeordnet ist, dass über den Lufteinlass (8) in das Innenrohr (9) eingeführte Luft in der Nähe des Temperaturfühlers (7) in den Raum zwischen Innenrohr (9) und Messrohr (11) strömt, sich beim Überströmen ausdehnt und das Messrohr (11) in der Umgebung des Temperaturfühlers (7) abkühlt, und dann über den Luftausgang (12) aus dem Messrohr (11) ausströmt.

3. Leckagemessgerät nach Anspruch 1 oder 2, dadurch gekennzeichnet, dass das Messrohr (11) an einem Rohrteil (16) befestigt ist, das zwischen die dichtschliessende Armatur und eine nachfolgende Rohrleitung (14) montierbar ist.

4. Leckagemessgerät nach Anspruch 3, dadurch gekennzeichnet, dass das Messrohr (11) in das Rohrteil (16) hineinragt und die dadurch bewirkte Verkleinerung des Strömungsquerschnitts durch einen im Vergleich zur Armatur vergrösserten Innendurchmesser (d₁) des Rohrteils (16) kompensiert ist.

5. Leckagemessgerät nach einem der Ansprüche 1 bis 4, dadurch gekennzeichnet, dass die Auswerteeinrichtung eine Temperaturanzeige umfasst.

6. Leckagemessgerät nach einem der Ansprüche 1 bis 5, dadurch gekennzeichnet, dass die Auswerteeinrichtung Mittel umfasst, die anhand des zeitlichen Verlaufs der mit dem Temperaturfühler (7) gemessenen Temperatur die Leckagegrösse berechnen.

7. Verfahren zur Messung der Leckage einer dichtschliessenden Armatur mittels eines an deren Ausgang angeschlossenen Leckagemessgeräts (6), insbesondere nach einem der Ansprüche 1 bis 6, mit den Schritten:
a) Aufheizen der Armatur und des Leckagemessgeräts (6) durch Öffnen der Armatur und Durchströmen eines heissen Mediums;
b) Schliessen der Armatur;
c) Abkühlen des Messrohrs (11) des Leckagemessgeräts (6) in der Umgebung des Temperaturfühlers (7) durch Luftbeaufschlagung;
d) Unterbrechen der Luftbeaufschlagung;
e) Messen und Auswerten des Temperaturanstiegs des Messrohrs (11).

8. Verfahren nach Anspruch 7, dadurch gekennzeichnet, dass in Schritt e) die Zeitspanne gemessen wird, in der das Messrohr (11) eine bestimmte Temperatur erreicht, und dann aus dieser Zeitspanne die Leckagengrösse berechnet wird.

9. Verfahren zur Messung der Leckage einer dichtschliessenden Armatur mittels eines an deren Ausgang angeschlossenen Leckagemessgeräts (6), insbesondere nach einem der Ansprüche 1 bis 6, mit den Schritten:
a) Abkühlen der Armatur und des Leckagemessgeräts (6) durch Öffnen der Armatur und Durchströmen eines kalten Mediums;
b) Schliessen der Armatur;
c) Erwärmen des Messrohrs (11) des Leckagemessgeräts (6) in der Umgebung des Temperaturfühlers (7) durch Gasbeaufschlagung;
d) Unterbrechen der Gasbeaufschlagung;
e) Messen und Auswerten des Temperaturabfalls des Messrohrs (11).

10. Verfahren nach Anspruch 9, dadurch gekennzeichnet, dass in Schritt e) die Zeitspanne gemessen wird, in der das Messrohr (11) eine bestimmte Temperatur erreicht, und dann aus dieser Zeitspanne die Leckagengrösse berechnet wird.
